# EUROPÄISCHE PATENTSCHRIFT

(11) **EP 1 414 260 B1**
(45) Veröffentlichungstag und Bekanntmachung des Hinweises auf die Patenterteilung: **27.04.2005**
(21) Anmeldenummer: 02405900.8
(22) Anmeldetag: 21.10.2002
(51) Int. Cl.: H04Q 7/38

(54) **Verfahren, System und Vorrichtungen zur Teilnehmerauthentifizierung in einem Telekommunikationsnetz**
Method, system and devices for subscriber authentication in a telecommunication network
Procédé, système et dispositifs pour l'authentification d'utilisateurs dans un réseau de télécommunications

(43) Veröffentlichungstag der Anmeldung: 28.04.2004
(73) Patentinhaber: Swisscom Mobile AG, 3050 Bern (CH)
(72) Erfinder: Oswald, Rudolf, 3014 Bern (CH)
(74) Vertreter: Vogel, Dany

(56) Entgegenhaltungen:
- EP-A- 1 209 935
- WO-A-01/37477
- DE-A- 19 955 096
- MÜLLER, K.: "Intermediate report on UMTS security mechanisms" USECA, PROJECT NUMBER AC336, [Online] 1. April 1999 (1999-04-01), Seiten 14-22, XP002254809 Gefunden im Internet: <URL:http://www.cs.mdx.ac.uk/staffpages/m_ cheng/link/useca-umts-security-architectur e.pdf> [gefunden am 2003-09-17]
- "Universal Mobile Telecommunications System (UMTS);3G Security; Security Architecture (3g TS 33.102 version 3.1. Release 1999)" ETSI TS 133 102 V3.3.1, XX, XX, 1. Januar 2000 (2000-01-01), Seiten 1-60, XP002167547

## Beschreibung

### Technisches Gebiet

Die vorliegende Erfindung betrifft ein Verfahren, ein System und Vorrichtungen zur Teilnehmerauthentifizierung in einem Telekommunikationsnetz, insbesondere in einem Mobilfunknetz. Die Erfindung betrifft insbesondere ein Verfahren, ein System, ein Identifizierungsmodul, eine Zugangskontrollvorrichtung und eine Authentifizierungszentrale für die Teilnehmerauthentifizierung in einem Telekommunikationsnetz gemäss den Oberbegriffen der entsprechenden unabhängigen Ansprüche.

### Stand der Technik

In den insbesondere in Europa verbreiteten GSM-Mobilfunknetzen (Global System for Mobile Communication) werden Authentifizierungsvektoren in Authentifizierungszentralen generiert und an Zugangskontrolleinheiten übermittelt. Die Authentifizierungsvektoren werden jeweils für einen bestimmten Teilnehmer des Mobilfunknetzes in der Authentifizierungszentrale seines Heimnetzes generiert. Wenn sich der Teilnehmer mit seinem Kommunikationsendgerät und dem damit verbundenen Identifizierungsmodul in einem Mobilfunknetz einbucht, wird vom Identifizierungsmodul eine Teilnehmeridentifizierung über das Mobilfunknetz an eine Zugangskontrolleinheit des Mobilfunknetzes übermittelt, beispielsweise an eine VLR-Einheit (Visitor Location Register). Auf Grund der empfangenen Teilnehmeridentifizierung bestimmt die Zugangskontrolleinheit das Heimnetz des betreffenden Teilnehmers und fordert von der Authentifizierungszentrale dieses Heimnetzes Authentifizierungsvektoren für den Teilnehmer an. Die Authentifizierungszentrale übermittelt einen Satz von mehreren Authentifizierungsvektoren an die Zugangskontrolleinheit. Zur Authentifizierung des Teilnehmers übermittelt die Zugangskontrolleinheit jeweils einen Authentifizierungstoken, der Teile aus jeweils einem der Authentifizierungsvektoren des erhaltenen Satzes umfasst, an das Identifizierungsmodul des Teilnehmers. Auf Grund des erhaltenen Authentifizierungstokens generiert das Identifizierungsmodul unter Zuhilfenahme kryptografischer Algorithmen eine Authentifizierungsantwort und übermittelt diese über das Mobilfunknetz an die Zugangskontrolleinheit. Wenn sich der Teilnehmer erneut im besuchten Mobilfunknetz über die Zugangskontrolleinheit einbuchen will und die Zugangskontrolleinheit sämtliche Authentifizierungsvektoren aus dem für den Teilnehmer bereitgestellten Satz verwendet hat, fordert sie von der Authentifizierungszentrale neue Authentifizierungsvektoren an.

In den Mobilfunknetzen der dritten Generation, beispielsweise in UMTS-Mobilfunknetzen (Universal Mobile Telephone System), werden die Authentifizierungsvektoren zur Verbesserung der Sicherheit zusätzlich mit Sequenznummem versehen, die in der Folge auch in den daraus generierten Authentifizierungstoken enthalten sind. Für die Teilnehmer werden in den Authentifizierungszentralen der dritten Generation Authentifizierungsvektoren mit Sequenznummem bereitgestellt, welche jeweils mindestens einen Sequenzteil mit aufsteigendem Wert umfassen. Der Sequenzteil wird mittels eines Zählers bestimmt, der der Teilnehmeridentifizierung des betreffenden Teilnehmers zugeordnet ist, und ergibt sich durch einfache Inkrementierung des Sequenzteils der letzten für die betreffende Teilnehmeridentifizierung ausgelieferten Sequenznummer. Falls der Sequenzteil der letzten Sequenznummer für die betreffende Teilnehmeridentifizierung beispielsweise 8 ist, und falls in einem Satz jeweils drei Authentifizierungsvektoren enthalten sind, ergeben sich die Sequenzteile 9, 10 und 11 für den Satz mit den nächsten drei Authentifizierungsvektoren. Um zu verhindern, dass die Identifizierungsmodule durch bereits verwendete Authentifizierungstoken getäuscht werden, die durch unberechtigte Parteien an die Identifizierungsmodule übermittelt werden, wird in den Identifizierungsmodulen der dritten Generation die Neuheit der Authentifizierungstoken respektive der dafür verwendeten Authentifizierungsvektoren anhand der Sequenznummern überprüft. Die Identifizierungsmodule der dritten Generation, so genannte USIM-Module (Universal Subscriber Identity Module), überprüfen jeweils, ob die in einem empfangenen Authentifizierungstoken enthaltene Sequenznummer grösser als eine im Identifizierungsmodul auf Grund einer früheren Authentifizierung gespeicherte Sequenznummer ist. Falls die neue Sequenznummer nicht grösser als eine ältere gespeicherte Sequenznummer ist, brechen die Identifizierungsmodule die weitere Verarbeitung des Authentifizierungstokens ab und übermitteln eine Fehlermeldung an die Zugangskontrolleinheit.

Die Ausstattung der Authentifizierungsvektoren und folglich der daraus generierten Authentifizierungstoken mit Sequenznummem und die Überprüfung der Neuheit von Authentifizierungstoken respektive Authentifizierungsvektoren auf der Grundlage dieser Sequenznummern erhöhen zwar die Sicherheit der Mobilfunknetze der dritten Generation gegenüber früherer Mobilfunknetze hinsichtlich unberechtigten Wiederholungen von Authentifizierungstoken, sie führen jedoch auch zu einem operationellen Problem. Ein betriebstechnisches Problem tritt nämlich auf, wenn sich ein Teilnehmer mit seinem Identifizierungsmodul in ein besuchtes Mobilfunknetz der dritten Generation einbuchen will, wenn die zuständige Zugangskontrolleinheit über keine Authentifizierungsvektoren verfügt, die noch nicht verwendet wurden, und wenn die zuständige Zugangskontrolleinheit keine neuen Authentifizierungsvektoren von der Authentifizierungszentrale des Heimnetzes des Teilnehmers beziehen kann, beispielsweise weil die Datenkommunikation zwischen der Zugangskontrolleinheit und der Authentifizierungszentrale und/oder die Authentifizierungszentrale gestört ist. In einer solchen Situation kann sich der Teilnehmer mit seinem Identifizierungsmodul der dritten Generation nicht in das besuchte Mobilfunknetz einbuchen, weil die Zugangskontrolleinheit keinen neuen Authentifizierungstoken an das Identifizierungsmodul übermitteln kann, der die Neuheitsüberprüfung durch das Identifizierungsmodul bestehen würde. Mit anderen Worten, wenn die Datenkommunikation zwischen der Zugangskontrolleinheit eines ersten Mobilfunknetzes und der Authentifizierungszentrale eines zweiten Mobilfunknetzes gestört ist, sei es wegen eines Verbindungsunterbruchs, wegen Überlastung des Datenverkehrs oder wegen einer Störung in der Authentifizierungszentrale, müssen Teilnehmer des zweiten Mobilfunknetzes damit rechnen, dass sie sich nicht in das erste Mobilfunknetz einbuchen können und somit nicht mittels ihrer Kommunikationsendgeräte kommunizieren können.

Die EP-A-1 209 935 beschreibt eine auf der 3GPP TS 33.102 basierende Teilnehmerauthentifizierung in 2G und 3G Netzen: beim Einbuchen eines Teilnehmers mit seinem Endgerät und dem damit verbundenen Identifizierungsmodul (USIM) in ein Mobilfunknetz wird von der Authentifizierungszentrale des Heimatnetzes ein Satz einmalig verwendbarer Authentifizierungsvektoren angefordert und in der Zugangskontrolleinheit (VLR/SGSN) des bedienenden Netzes abgespeichert. Es wird allgemein erwähnt, daß die Authentifizierungsvektoren wiederverwendet werden können, ohne jedoch Details anzugeben.

### Dastellung der Erfindung

Es ist eine Aufgabe der vorliegenden Erfindung, ein neues Verfahren, ein neues System und neue Vorrichtungen für die Teilnehmerauthentifizierung in einem Telekommunikationsnetz, insbesondere in einem Mobilfunknetz, vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Für die Teilnehmerauthentifizierung in einem Telekommunikationsnetz, insbesondere in einem Mobilfunknetz, beispielsweise ein UMTS-Mobilfunknetz, werden in einer Authentifizierungszentrale, beispielsweise eine AuC-Einheit (Authentication Centre) für ein UMTS-Mobilfunknetz, Authentifizierungsvektoren generiert und von der Authentifizierungszentrale an eine Zugangskontrolleinheit des Telekommunikationsnetzes übermittelt, beispielsweise an eine VLR- oder eine SGSN-Einheit (Serving GPRS Support Node, GPRS - General Packet Radio Service). In der Zugangskontrolleinheit wird aus einem der Authentifizierungsvektoren ein Authentifizierungstoken generiert, welcher eine Sequenznummer aus diesem Authentifizierungsvektor umfasst. Der generierte Authentifizierungstoken wird von der Zugangskontrolleinheit über das Telekommunikationsnetz an ein Identifizierungsmodul des Teilnehmers übermittelt, beispielsweise an ein USIM-Modul für den Einsatz in einem UMTS-Mobilfunknetz. Die Neuheit des empfangenen Authentifizierungstokens wird durch das Identifizierungsmodul überprüft, wobei überprüft wird, ob eine im Authentifizierungstoken enthaltene Sequenznummer grösser als eine im Identifizierungsmodul gespeicherte Sequenznummer ist. Basierend auf dem empfangenen Authentifizierungstoken wird durch das Identifizierungsmodul eine Authentifizierungsantwort generiert und vom Identifizierungsmodul über das Telekommunikationsnetz an die Zugangskontrolleinheit übermittelt.

Die oben genannten Ziele werden durch die vorliegende Erfindung insbesondere dadurch erreicht, dass durch die Authentifizierungszentrale eine Wiederholungskennung in einen der Authentifizierungsvektoren eingefügt wird, dass der Authentifizierungstoken durch die Zugangskontrolleinheit aus Teilen des Authentifizierungsvektors generiert wird, die die Wiederholungskennung umfassen, dass durch das Identifizierungsmodul überprüft wird, ob im empfangenen Authentifizierungstoken eine Wiederholungskennung enthalten ist, und dass die Authentifizierungsantwort gegebenenfalls generiert wird, auch wenn die im empfangenen Authentifizierungstoken enthaltene Sequenznummer nicht grösser ist als die oben erwähnte, im Identifizierungsmodul gespeicherte Sequenznummer.

Das Einfügen einer Wiederholungskennung in einen Authentifizierungsvektor durch die Authentifizierungszentrale hat den Vorteil, dass die Authentifizierungszentrale bestimmen kann, ob ein Authentifizierungsvektor mehrfach für die Generierung eines Authentifizierungstokens verwendet werden darf respektive ob ein Authentifizierungstoken, der aus einem bestimmten Authentifizierungsvektor generiert wurde, mehrfach an das Identifizierungsmodul übermittelt werden darf. Die Authentifizierungszentrale kann somit die Zulässigkeit der mehrfachen Verwendung von Authentifizierungsvektoren respektive Authentifizierungstoken dynamisch an die betriebstechnische Situation anpassen. Die Zulässigkeit der mehrfachen Verwendung von Authentifizierungsvektoren respektive Authentifizierungstoken kann beispielsweise individuell an die Kommunikationsqualität in den verschiedenen Telekommunikationsnetzen und/oder an den betriebstechnischen Zustand der Datenkommunikation zwischen der Authentifizierungszentrale und der Zugangskontrolleinheit eines bestimmten Telekommunikationsnetzes angepasst werden. Es ist für die Authentifizierungszentrale möglich, zentralisiert zu steuern für welche Authentifizierungstoken die Neuheitsprüfung in den Identifizierungsmodulen ausgesetzt wird. Da die Authentifizierungsvektoren, einschliesslich einer gegebenenfalls eingefügten Wiederholungskennung, durch die Authentifizierungszentrale in verschlüsselter Form generiert und übermittelt werden, ist auch die End-zu-End Sicherheit der Wiederholungskennung zwischen der Authentifizierungszentrale und dem Identifizierungsmodul gewährleistet. Die Wiederholungskennung ermöglicht den Zugangskontrolleinheiten zu erkennen, welche Authentifizierungsvektoren mehrfach verwendet werden können, so dass darauf basierende Authentifizierungstoken trotzdem von den Identifizierungsmodulen akzeptiert werden, wenn beispielsweise die Datenkommunikation zu der betreffenden Authentifizierungszentrale gestört ist. Durch die vorgeschlagene Lösung kann die auf den Sequenznummern basierende zusätzliche Sicherheit der Authentifizierungsvektoren respektive Authentifizierungstoken in den Mobilfunknetzen der dritten Generation beibehalten werden, ohne dabei Kommunikationsausfälle für einen Teilnehmer in Kauf nehmen zu müssen, wenn eine Zugangskontrolleinheit eines besuchten Mobilfunknetzes keine neuen Authentifizierungsvektoren von der Authentifizierungszentrale des Heimnetzes dieses Teilnehmers anfordern kann.

In einer bevorzugten Ausführungsvariante wird durch die Zugangskontrolleinheit überprüft, ob im Authentifizierungsvektor, der als letzter zur Generierung eines an das Identifizierungsmodul übermittelten Authentifizierungstokens verwendet wurde, eine Wiederholungskennung enthalten ist, und die Zugangskontrolleinheit übermittelt den aus diesem letzten Authentifizierungsvektor generierten Authentifizierungstoken gegebenenfalls erneut über das Telekommunikationsnetz an das Identifizierungsmodul. Durch die Überprüfung der Wiederholungskennung im zuletzt zur Generierung eines Authentifizierungstokens verwendeten Authentifizierungsvektors vor der erneuten Übermittlung des betreffenden Authentifizierungstokens, kann verhindert werden, dass Authentifizierungstoken erneut an das Identifizierungsmodul übermittelt werden, wenn sie dort sowieso wegen fehlender Neuheit nicht akzeptiert werden. Dadurch kann unnötiger Signalisierungsverkehr im Telekommunikationsnetz reduziert werden.

Die im empfangenen Authentifizierungstoken enthaltene Sequenznummer wird im Identifizierungsmodul gespeichert, wenn sie grösser ist als eine im Identifizierungsmodul gespeicherte Sequenznummer, die vorgängig von der Zugangskontrolleinheit empfangen wurde. Wenn im Authentifizierungstoken eine Wiederholungskennung enthalten ist, wird durch das Identifizierungsmodul vorzugsweise vor der Generierung der Authentifizierungsantwort überprüft, ob die im Authentifizierungstoken enthaltene Sequenznummer gleich gross wie die grösste im Identifizierungsmodul gespeicherte Sequenznummer ist, die vorgängig von der Zugangskontrolleinheit empfangen wurde. Dadurch wird gewährleistet, dass ein mehrfach verwendeter Authentifizierungstoken nur dann im Identifizierungsmodul akzeptiert wird, wenn er dem unmittelbar vorher empfangenen Authentifizierungstoken entspricht. Das heisst, die Zulässigkeit der Wiederverwendung eines Authentifizierungstokens respektive Authentifizierungsvektors wird auf die unmittelbare Wiederverwendung beschränkt, was zur Überbrückung der beschriebenen temporären betriebstechnischen Schwierigkeiten ausreicht. Dadurch ist es für eine unberechtigte Partei nicht möglich, Identifizierungsmodule zu einem späteren Zeitpunkt mit Authentifizierungstoken zu täuschen, die eine Wiederholungskennung enthalten.

Die Authentifizierungszentrale übermittelt jeweils einen Satz mit mehreren Authentifizierungsvektoren an die Zugangskontrolleinheit. In einer bevorzugten Ausführungsvariante fügt die Authentifizierungszentrale die Wiederholungskennung in den letzten Authentifizierungsvektor des Satzes ein, der von der Zugangskontrolleinheit als letzter des Satzes zur Generierung eines Authentifizierungstokens verwendet wird. Im oben angeführten Beispiel eines Satzes von drei Authentifizierungsvektoren, die die Sequenznummern mit den Sequenzteilen 9, 10 und 11 enthalten, wird gemäss dieser Ausführungsvariante die Wiederholungskennung in den Authentifizierungsvektor mit dem Sequenzteil 11 eingefügt, der von einer Zugangskontrolleinheit zuletzt zur Generierung eines an das Identifizierungsmodul zu übermittelnden Authentifizierungstokens verwendet wird. Dadurch wird die Zulässigkeit der Wiederverwendung von Authentifizierungsvektoren jeweils auf den letzten Authentifizierungsvektor in einem Satz beschränkt, der die höchste Sequenznummer aufweist. So lange eine Zugangskontrolleinheit über nicht verwendete Authentifizierungsvektoren für einen bestimmten Teilnehmer verfügt, ist es folglich für die Zugangskontrolleinheit nicht zulässig einen aus einem Authentifizierungsvektor generierten Authentifizierungstoken mehrfach an das Identifizierungsmodul dieses Teilnehmers zu übermitteln, da diese vorzeitig wiederholten Authentifizierungstoken durch das Identifizierungsmodul auf Grund der fehlenden Wiederholungskennung nicht akzeptiert würden.

Durch die Begrenzung der Zulässigkeit der Wiederverwendung von Authentifizierungsvektoren zur Generierung von Authentifizierungstoken, respektive der erneuten Übermittlung eines Authentifizierungstokens, wird das Risiko reduziert, dass die Identifizierungsmodule unrechtmässig durch wiederholte Authentifizierungstoken getäuscht werden.

In einer Ausführungsvariante übermittelt die Authentifizierungszentrale einen Satz von mehreren Authentifizierungsvektoren an die Zugangskontrolleinheit, die Zugangskontrolleinheit generiert jeweils einen Authentifizierungstoken aus einem neuen noch nicht verwendeten Authentifizierungsvektor des Satzes, und die Zugangskontrolleinheit fordert neue Authentifizierungsvektoren von der Authentifizierungszentrale an, bevor alle Authentifizierungsvektoren im Satz bereits zur Generierung von Authentifizierungstoken verwendet wurden, beispielsweise wenn nur noch ein nicht verwendeter Authentifizierungsvektor im Satz verbleibt. Durch die vorzeitige Anforderung von Authentifizierungsvektoren kann die Zeitdauer bis zum Zeitpunkt, wo neue Authentifizierungsvektoren in der Zugangskontrolleinheit benötigt werden, verlängert werden, womit die Wahrscheinlichkeit steigt, dass Authentifizierungsvektoren erfolgreich von der Authentifizierungszentrale angefordert und in der Zugangskontrolleinheit erhalten werden, wodurch die Anzahl mehrfach verwendeter Authentifizierungsvektoren respektive Authentifizierungstoken reduziert werden kann.

### Kurze Beschreibung der Zeichnungen

Nachfolgend wird eine Ausführung der vorliegenden Erfindung anhand eines Beispiels beschrieben. Das Beispiel der Ausführung wird durch die folgenden beigelegten Figuren illustriert:
Figur 1 zeigt ein Blockdiagramm, welches schematisch ein Kommunikationsendgerät mit einem Identifizierungsmodul illustriert, welche mit einem Telekommunikationsnetz verbunden sind, das eine Zugangskontrollvorrichtung und eine Authentifizierungszentrale umfasst.
Figur 2 zeigt ein Zeitdiagramm, das schematisch den Verfahrensablauf anhand des Datenaustauschs zwischen einem mit einem Kommunikationsendgerät verbundenen Identifizierungsmodul, einer Zugangskontrolleinheit und einer Authentifizierungszentrale illustriert.

### Wege zur Ausführung der Erfindung

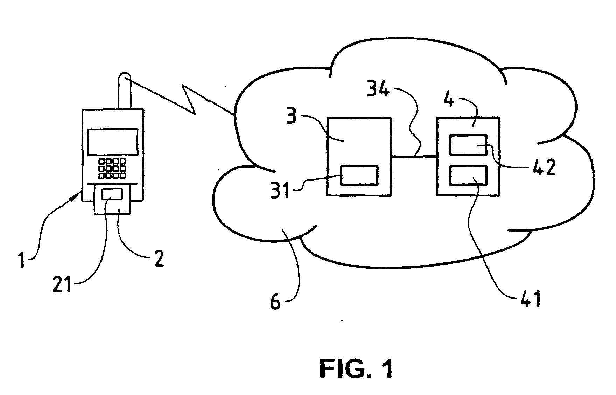

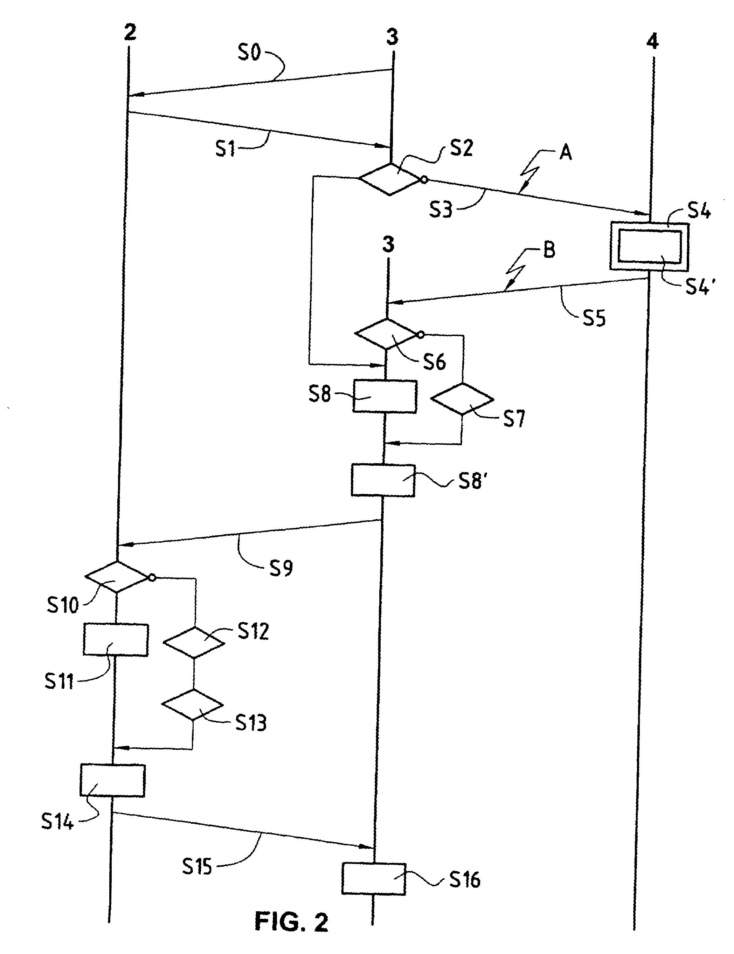

In den Figuren 1 und 2 werden einander entsprechende, gleiche Komponenten durch gleiche Bezugszeichen bezeichnet.

In der Figur 1 bezeichnet das Bezugszeichen 6 ein Telekommunikationsnetz 6, zum Beispiel ein Mobilfunknetz, beispielsweise ein GSModer UMTS-Mobilfunknetz oder ein WLAN (Wireless Local Area Network), oder ein Festnetz, beispielsweise ein ISDN-Netz (Integrated Services Digital Network), ein IP-Netz (Internet Protocol), ein LAN (Local Area Network) oder ein CATV-Netz (Cable Television). Das Telekommunikationsnetz 6 ist vorzugsweise ein UMTS-Mobilfunknetz.

Wie in der Figur 1 schematisch dargestellt ist, umfasst das Telekommunikationsnetz 6 eine Zugangskontrolleinheit 3 und eine Authentifizierungszentrale 4, die jeweils einen oder mehrere Computer umfassen und für den Datenaustausch miteinander verbindbar sind. Die Zugangskontrolleinheit 3 und die Authentifizierungszentrale 4 umfassen jeweils funktionale Module 31, 41, zur Ausführung der später mit Bezug auf die Figur 2 beschriebenen Funktionen. Die funktionalen Module 31, 41 sind vorzugsweise als programmierte Softwarefunktionen ausgeführt, die die Prozessoren der Zugangskontrolleinheit 3 und Authentifizierungszentrale 4 so steuern, dass sie die später mit Bezug auf die Figur 2 beschriebenen Funktionen ausführen. Die Zugangskontrolleinheit 3 ist vorzugsweise eine VLR-Einheit oder eine SGSN-Einheit für ein UMTS-Mobilfunknetz oder eine entsprechende Einheit in einem WLAN. Die Authentifizierungszentrale 4 ist vorzugsweise eine AuC-Einheit (Authentication Centre) für ein UMTS-Mobilfunknetz.

Das Bezugszeichen 1 bezeichnet ein Kommunikationsendgerät, das für die Kommunikation über das Telekommunikationsnetz 6 eingerichtet ist. Das Kommunikationsendgerät 1 ist vorzugsweise ein mobiles Kommunikationsendgerät für die Kommunikation über ein UMTS-Mobilfunknetz, beispielsweise ein Mobilfunktelefon oder ein Laptop- oder PDA-Computer (Personal Digital Assistant) mit einem geeigneten Kommunikationsmodul.

Das Bezugszeichen 2 bezeichnet ein Identifizierungsmodul, das entfernbar mit dem Kommunikationsendgerät 1 verbunden ist. Der Fachmann wird verstehen, dass das Identifizierungsmodul 2 auch fest im Kommunikationsendgerät 1 integriert sein kann. Das Identifizierungsmodul 2 umfasst einen Daten- und Programmspeicher, ein gespeichertes funktionales Modul 21 mit programmierten Softwarefunktionen, sowie einen Prozessor, der durch die programmierten Softwarefunktionen so gesteuert wird, dass Funktionen ausgeführt werden, die nachfolgend mit Bezug zur Figur 2 beschrieben werden. Das Identifizierungsmodul 2 umfasst eine gespeicherte Teilnehmeridentifizierung und ist vorzugsweise als Chipkarte ausgeführt. Die Teilnehmeridentifizierung ist vorzugsweise eine IMSI (International Mobile Subscriber Identity), welche den Teilnehmer und dessen Heimnetz und damit die Authentifizierungszentrale dieses Heimnetzes identifiziert. Das Identifizierungsmodul 2 und das Kommunikationsendgerät 1 umfassen eine kontaktlose oder kontaktbehaftete Geräteschnittstelle zur entfernbaren Verbindung des Identifizierungsmoduls 2 mit dem Kommunikationsendgerät 1. Die Geräteschnittstelle ermöglicht den Datenaustausch zwischen dem Identifizierungsmodul 2 und dem Kommunikationsendgerät 1, so dass mittels des Kommunikationsendgeräts 1 Daten zwischen dem Identifizierungsmodul 2 und Einheiten im Telekommunikationsnetz 6 ausgetauscht werden können. Das Identifizierungsmodul 2 ist vorzugsweise ein USIM-Modul für UMTS-Mobilfunknetze.

Der Fachmann wird verstehen, dass die oben im Zusammenhang mit der Zugangskontrolleinheit 3, der Authentifizierungszentrale 4 und dem Identifizierungsmodul 2 erwähnten funktionalen Module 31, 41 und 21 auch vollständig oder teilweise hardwaremässig ausgeführt werden können.

In den folgenden Abschnitten werden mit Bezug auf die Figur 2 die durch das Identifizierungsmodul 2, die Zugangskontrolleinheit 3 und die Authentifizierungszentrale 4 (respektive durch die funktionalen Module 21, 31, 41) ausgeführten Funktionen und der Ablauf des Verfahrens zur Teilnehmerauthentifizierung im Telekommunikationsnetz 6 beschrieben.

Im Schritt S0 wird von der Zugangskontrolleinheit 3 eine Identifizierungsaufforderung über das Telekommunikationsnetz 6 an das mit dem Kommunikationsendgerät 1 verbundene Idenfifizierungsmodul 2 übermittelt.

Im Schritt S1 wird die im Identifizierungsmodul 2 gespeicherte Teilnehmeridentifizierung über das Telekommunikationsnetz 6 an die Zugangskontrolleinheit 3 übermittelt.

Im Schritt S2 überprüft die Zugangskontrolleinheit 3, ob der empfangenen Teilnehmeridentifizierung ein Satz (Array) von Authentifizierungsvektoren zugeordnet ist und ob darin ein Authentifizierungsvektor gespeichert ist, der noch nicht als verwendet gekennzeichnet (oder gelöscht) ist. Falls der empfangenen Teilnehmeridentifizierung ein noch nicht verwendeter Authentifizierungsvektor zugeordnet ist, führt die Zugangskontrolleinheit 3 den Schritt S8 aus. Andernfalls führt die Zugangskontrolleinheit 3 den Schritt S3 aus. In einer Ausführungsvariante führt die Zugangskontrolleinheit 3 den Schritt S3 aus, wenn nur noch ein letzter nicht verwendeter Authentifizierungsvektor im betreffenden Satz vorhanden ist.

Im Schritt S3 fordert die Zugangskontrolleinheit 3 von der Authentifizierungszentrale 4 im Heimnetz des Teilnehmers, welches durch die im Schritt S1 empfangene Teilnehmeridentifizierung bestimmt ist, einen neuen Satz von Authentifizierungsvektoren für die im Schritt S1 empfangene Teilnehmeridentifizierung an.

Im Schritt S4 bestimmt die Authentifizierungseinheit 4 einen neuen Satz von Authentifizierungsvektoren mit aufsteigenden Sequenznummern für die im Schritt S3 von der Zugangskontrolleinheit 3 empfangene Teilnehmeridentifizierung. Dabei werden die Sequenznummem so bestimmt, dass sie jeweils mindestens einen Sequenzteil umfassen, der mittels eines der betreffenden Teilnehmeridentifizierung zugeordneten Zählers bestimmt wird und sich durch einfache Inkrementierung des Sequenzteils der letzten für die betreffende Teilnehmeridentifizierung ausgelieferten Sequenznummer ergibt. Die Authentifizierungseinheit 4 erzeugt einen Satz von Authentifizierungsvektoren, die jeweils eine der bestimmten Sequenznummem umfassen. In den letzten Authentifizierungsvektor des Satzes, der die höchste Sequenznummer aufweist und folglich von einer Zugangskontrolleinheit zuletzt verwendet wird, fügt die Authentifizierungszentrale 4 im Schritt S4' eine Wiederholungskennung ein. Für die Wiederholungskennung genügt beispielsweise ein einziges Bit, das an einer definierten Stelle innerhalb des Authentifizierungsvektors angeordnet wird. Die Wiederholungskennung kann beispielsweise innerhalb eines AMF-Datenfelds (Authentication Management Field) oder einer Zufallszahl (RAND) des Authentifizierungsvektors angeordnet werden. Das Einfügen der Wiederholungskennung kann im Schritt S4' in Abhängigkeit des Telekommunikationsnetzes respektive der Zugangskontrolleinheit 3 vorgenommen werden, von welchen die Anforderung von Authentifizierungsvektoren erhalten wurde. Zu diesem Zweck führt die Authentifizierungszentrale 4 eine Tabelle 42 mit Netzwerkidentifizierungen, denen jeweils Angaben über die Kommunikationsqualität im betreffenden Telekommunikationsnetz und Qualitätsangaben über die Datenkommunikation via die Verbindung 34 zwischen der betreffenden Zugangskontrolleinheit 3 und der Authentifizierungszentrale 4 zugeordnet sind. Die Qualitätsangaben können beispielsweise auch Angaben für verschiedene Zeitperioden umfassen. Das Einfügen von Wiederholungskennungen im Schritt S4' kann unterlassen werden, wenn die Qualitätsangaben für die betreffende Zugangskontrolleinheit 3 respektive das zugehörige Telekommunikationsnetz, beispielsweise in der betreffenden Zeitperiode, einen definierten Minimalwert übersteigen.

Im Schritt S5 übermittelt die Authentifizierungszentrale 4 den im Schritt S4 erzeugten Satz von Authentifizierungsvektoren zur Speicherung an die Zugangskontrolleinheit 3.

Im Schritt S6 überprüft die Zugangskontrolleinheit 3, ob die im Schritt S3 übermittelte Anforderung von Authentifizierungsvektoren von der Authentifizierungszentrale 4 erfolgreich beantwortet wurde. Falls die Datenkommunikation über die Verbindung 34, wie in der Figur 2 durch die Pfeile A, B angedeutet, gestört ist, führt die Zugangskontrolleinheit 3 den Schritt S7 aus. Falls im Schritt S5 erfolgreich Authentifizierungsvektoren empfangen wurden, führt die Zugangskontrolleinheit 3 den Schritt S8 aus.

Im Schritt S7 überprüft die Zugangskontrolleinheit 3, ob der im Schritt S1 empfangenen Teilnehmeridentifizierung ein Satz (Array) von bereits verwendeten Authentifizierungsvektoren zugeordnet ist und ob der darin gespeicherte letzte Authentifizierungsvektor mit der höchsten Sequenznummer eine Wiederholungskennung umfasst. Falls dieser letzte Authentifizierungsvektor eine Wiederholungskennung umfasst, bestimmt ihn die Zugangskontrolleinheit 3 als erneut zu verwendender Authentifizierungsvektor und führt den Schritt S8' aus. Andernfalls versucht die Zugangskontrolleinheit 3 nochmals von der Authentifizierungszentrale 4 neue Authentifizierungsvektoren anzufordern und führt den Schritt S3 aus. Nach einer definierten Anzahl erfolgloser Versuche, wird von der Zugangskontrolleinheit 3 eine Fehlermeldung mit einem entsprechenden Hinweis an das Identifizierungsmodul 2 übermittelt.

Im Schritt S8 bestimmt die Zugangskontrolleinheit 3 den Authentifizierungsvektor mit der niedrigsten noch nicht als verwendet gekennzeichneten Sequenznummer, der der im Schritt S1 empfangenen Teilnehmeridentifizierung zugeordnet ist.

Im Schritt S8' generiert die Zugangskontrolleinheit 3 einen Authentifizierungstoken aus definierten Teilen des im Schritt S7 respektive im Schritt S8 bestimmten Authentifizierungsvektors. Bei der Generierung des Authentifizierungstokens werden die folgenden im Authentifizierungsvektor enthaltenen Teile verwendet: die Sequenznummer, die Zufallszahl und das AMF-Datenfeld.

Im Schritt S9 übermittelt die Zugangskontrolleinheit 3 eine Authentifizierungsaufforderung mit dem im Schritt S8' generierten Authentifizierungstoken über das Telekommunikationsnetz 6 an das Identifizierungsmodul 2.

Im Schritt S10 wird durch das Identifizierungsmodul 2 überprüft, ob die Sequenznummer des im Schritt S9 empfangenen Authentifizierungstokens grösser ist, als weitere im Identifizierungsmodul 2 gespeicherte Sequenznummern, die vorgängig von der Zugangskontrolleinheit 3 empfangen wurden. Nicht zeit-basierte (non-time based) Sequenznummem, die im Identifizierungsmodul 2 vorgängig von der selben Zugangskontrolleinheit 3 empfangen wurden, umfassen einen gleichen Indexwert, der zusätzlich zum Sequenzteil in der Sequenznummer enthalten ist. Im Unterschied zu den bevorzugt verwendeten nicht zeit-basierten Sequenznummem umfassen zeit-basierte (time-based) Sequenznummem zusätzlich zum Sequenzteil einen Zeitteil mit einem Zeitstempel. Falls die im Schritt S9 empfangene Sequenznummer grösser als die vorgängig von der Zugangskontrolleinheit 3 entgegengenommenen Sequenznummern ist, wird die im Schritt S9 empfangene Sequenznummer im Schritt S11 im Identifizierungsmodul 2 gespeichert und das Identifizierungsmodul 2 führt den Schritt S14 aus, andernfalls wird vom Identifizierungsmodul 2 der Schritt S12 ausgeführt.

Im Schritt S12 wird durch das Identifizierungsmodul 2 überprüft, ob der im Schritt S9 empfangene Authentifizierungstoken eine Wiederholungskennung enthält. Falls der im Schritt S9 empfangene Authentifizierungstoken eine Wiederholungskennung enthält, führt das Identifizierungsmodul 2 den Schritt S13 aus, andernfalls wird vom Identifizierungsmodul 2 eine Fehlermeldung an die Zugangskontrolleinheit 3 übermittelt, die für die vorliegende Erfindung nicht von Bedeutung ist.

Im Schritt S13 wird durch das Identifizierungsmodul 2 überprüft, ob die Sequenznummer des im Schritt S9 empfangenen Authentifizierungstokens gleich gross ist, wie die grösste der im Identifizierungsmodul 2 gespeicherten Sequenznummern, die vorgängig von der Zugangskontrolleinheit 3 empfangen wurden. Falls die im Schritt S9 empfangene Sequenznummer gleich gross wie die grösste der vorgängig von der Zugangskontrolleinheit 3 entgegengenommenen Sequenznummern ist, führt das Identifizierungsmodul 2 den Schritt S14 aus, andernfalls wird vom Identifizierungsmodul 2 eine Fehlermeldung an die Zugangskontrolleinheit 3 übermittelt, die für die vorliegende Erfindung nicht von Bedeutung ist.

Der Fachmann wird verstehen, dass die Reihenfolge der Schritte S12 und S13 auch umgekehrt durchgeführt werden kann.

Im Schritt S14 generiert das Identifizierungsmodul 2 basierend auf dem im Schritt S9 empfangenen Authentifizierungstoken eine Authentifizierungsantwort.

Im Schritt S15 übermittelt das Identifizierungsmodul 2 die im Schritt S14 generierte Authentifizierungsantwort über das Telekommunikationsnetz 6 an die Zugangskontrolleinheit 3.

Im Schritt S16 kennzeichnet die Zugangskontrolleinheit 3 den für den im Schritt S9 übermittelten Authentifizierungstoken verwendete Authentifizierungsvektor als verwendet, falls er nicht bereits als verwendet gekennzeichnet ist.

An dieser Stelle soll darauf hingewiesen werden, dass weitere Mechanismen des Authentifizierungsverfahrens detailliert im technischen Dokument "Technical Specification: 3rd Generation Partnership Project; Technical Specification Group Services and System Aspects; 3G Security; Security Architecture"; Ausgabe 1999; 3GPP TS 33.102 V3.12.0, Juni 2002; Kapitel C.2 und C.3.2; erhältlich bei: GPP Support Office Address, 650 Route des Lucioles - Sophia Antipolis, Valborne, France, beschrieben werden. Insbesondere werden in diesem technischen Dokument die Generierung von Sequenznummern, die bei der Authentifizierung verwendeten kryptografischen Mechanismen und Mechanismen zum Schutz vor einem Überlauf der Sequenznummern, ein so genannter Wrap Around, beschrieben, worauf in der vorliegenden Beschreibung nicht eingegangen wurde.

## Patentansprüche

1. Verfahren zur Teilnehmerauthentifizierung in einem Telekommunikationsnetz (6), umfassend Generieren von Authentifizierungsvektoren (S4) in einer Authentifizierungszentrale (4), Übermitteln der generierten Authentifizierungsvektoren (S5) von der Authentifizierungszentrale (4) an eine Zugangskontrolleinheit (3) des Telekommunikationsnetzes (6), Übermitteln eines Authentifizierungstokens (S9), der aus einem der Authentifizierungsvektoren generiert wird und eine Sequenznummer aus diesem Authentifizierungsvektor umfasst, von der Zugangskontrolleinheit (3) über das Telekommunikationsnetz (6) an ein Identifizierungsmodul (2) des Teilnehmers, Überprüfen (S10), ob die im empfangenen Authentifizierungstoken enthaltene Sequenznummer grösser als eine im Identifizierungsmodul (2) gespeicherte Sequenznummer ist, Generieren einer Authentifizierungsantwort (S14) durch das Identifizierungsmodul (2) basierend auf dem empfangenen Authentifizierungstoken, und Übermitteln der generierten Authentifizierungsantwort (S15) vom Identifizierungsmodul (2) über das Telekommunikationsnetz (6) an die Zugangskontrolleinheit (3), **gekennzeichnet durch**
- Einfügen einer Wiederholungskennung (S4') **durch** die Authentifizierungszentrale (4) in einen der Authentifizierungsvektoren,
- Generieren des Authentifizierungstokens (S8') **durch** die Zugangskontrolleinheit (3) aus Teilen des Authentifizierungsvektors, die die Wiederholungskennung umfassen, und
- Überprüfen (S12) **durch** das Identifizierungsmodul (2), ob im empfangenen Authentifizierungstoken eine Wiederholungskennung enthalten ist und gegebenenfalls Generieren der Authentifizierungsantwort (S14), auch wenn die im empfangenen Authentifizierungstoken enthaltene Sequenznummer nicht grösser als die genannte im Identifizierungsmodul (2) gespeicherte Sequenznummer ist.

2. Verfahren nach Anspruch 1, **dadurch gekennzeichnet, dass** durch die Zugangskontrolleinheit (3) überprüft wird (S7), ob im Authentifizierungsvektor, der als letzter zur Generierung eines an das Identifizierungsmodul (2) übermittelten Authentifizierungstokens verwendet wurde, eine Wiederholungskennung enthalten ist, und dass die Zugangskontrolleinheit (3) gegebenenfalls den aus diesem letzten Authentifizierungsvektor generierten Authentifizierungstoken erneut über das Telekommunikationsnetz (6) an das Identifizierungsmodul (2) übermittelt (S9).

3. Verfahren nach einem der Ansprüche 1 oder 2, **dadurch gekennzeichnet, dass** die im empfangenen Authentifizierungstoken enthaltene Sequenznummer im Identifizierungsmodul (2) gespeichert wird (S11), wenn sie grösser ist als eine im Identifizierungsmodul (2) gespeicherte Sequenznummer, die vorgängig von der Zugangskontrolleinheit (3) empfangen wurde, und dass durch das Identifizierungsmodul (2) vor der Generierung der Authentifizierungsantwort überprüft wird (S13), ob die im Authentifizierungstoken enthaltene Sequenznummer gleich gross wie die grösste im Identifizierungsmodul (2) gespeicherte Sequenznummer ist, die vorgängig von der Zugangskontrolleinheit (3) empfangen wurde, wenn im Authentifizierungstoken eine Wiederholungskennung enthalten ist.

4. Verfahren nach einem der Ansprüche 1 bis 3, **dadurch gekennzeichnet, dass** die Authentifizierungszentrale (4) einen Satz von mehreren Authentifizierungsvektoren an die Zugangskontrolleinheit (3) übermittelt (S5), und dass die Authentifizierungszentrale (4) die Wiederholungskennung in den letzten Authentifizierungsvektor des Satzes einfügt (S4'), der von der Zugangskontrolleinheit (3) als letzter des Satzes zur Generierung eines Authentifizierungstokens verwendet wird.

5. Verfahren nach einem der Ansprüche 1 bis 4, **dadurch gekennzeichnet, dass** die Authentifizierungszentrale (4) einen Satz von mehreren Authentifizierungsvektoren an die Zugangskontrolleinheit (3) übermittelt (S5), dass die Zugangskontrolleinheit (3) jeweils einen Authentifizierungstoken aus einem neuen noch nicht verwendeten Authentifizierungsvektor des Satzes generiert (S8), und dass die Zugangskontrolleinheit (3) neue Authentifizierungsvektoren von der Authentifizierungszentrale (4) anfordert (S3), wenn alle Authentifizierungsvektoren im Satz bereits zur Generierung von Authentifizierungstoken verwendet wurden, wobei die Zugangskontrolleinheit (3) überprüft (S7), ob im Authentifizierungsvektor, der als letzter des Satzes zur Erzeugung eines Authentifizierungstokens verwendet wurde, eine Wiederholungskennung enthalten ist, und den aus diesem letzten Authentifizierungsvektor generierten Authentifizierungstoken gegebenenfalls erneut an das Identifizierungsmodul (2) übermittelt (S9), wenn die Datenkommunikation mit der Authentifizierungszentrale (4) und/oder die Authentifizierungszentrale (4) gestört ist.

6. Verfahren nach einem der Ansprüche 1 bis 5, **dadurch gekennzeichnet, dass** die Authentifizierungszentrale (4) einen Satz von mehreren Authentifizierungsvektoren an die Zugangskontrolleinheit (3) übermittelt (S5), dass die Zugangskontrolleinheit (3) jeweils einen Authentifizierungstoken aus einem neuen noch nicht verwendeten Authentifizierungsvektor des Satzes generiert (S8), und dass die Zugangskontrolleinheit (3) neue Authentifizierungsvektoren von der Authentifizierungszentrale (4) anfordert (S3), bevor alle Authentifizierungsvektoren im Satz bereits zur Generierung von Authentifizierungstoken verwendet wurden.

7. System für die Teilnehmerauthentifizierung in einem Telekommunikationsnetz (6), umfassend mindestens eine Authentifizierungszentrale (4) zum Generieren von Authentifizierungsvektoren für die Teilnehmerauthentifizierung in einem Telekommunikationsnetz (6) und zum Übermitteln der generierten Authentifizierungsvektoren an Zugangskontrolleinheiten (3), mindestens eine mit dem Telekommunikationsnetz (6) verbindbare Zugangskontrolleinheit (3) zum Anfordern und Entgegennehmen von Authentifizierungsvektoren von der Authentifizierungszentrale (4), zum Generieren von Authentifizierungstoken aus jeweils einem der Authentifizierungsvektoren, und zum Übermitteln eines generierten Authentifizierungstokens über das Telekommunikationsnetz (6) an ein Identifizierungsmodul (2) eines Teilnehmers, mindestens ein Identifizierungsmodul (2), welches Mittel zum Entgegennehmen eines Authentifizierungstokens von der Zugangskontrolleinheit (3) über das Telekommunikationsnetz (6), Mittel zum Überprüfen, ob eine im empfangenen Authentifizierungstoken enthaltene Sequenznummer grösser als eine im Identifizierungsmodul (2) gespeicherte Sequenznummer ist, Mittel zum Generieren einer Authentifizierungsantwort basierend auf dem empfangenen Authentifizierungstoken, und Mittel zum Übermitteln der generierten Authentifizierungsantwort über das Telekommunikationsnetz (6) an die Zugangskontrolleinheit (3) umfasst, **dadurch gekennzeichnet,**
**dass** die Authentifizierungszentrale (4) Mittel umfasst zum Einfügen einer Wiederholungskennung in einen der Authentifizierungsvektoren,
**dass** die Zugangskontrolleinheit (3) Mittel umfasst zum Generieren eines Authentifizierungstokens (S7, S8) aus Teilen eines Authentifizierungsvektors, die die Wiederholungskennung umfassen, und
**dass** das Identifizierungsmodul (2) Mittel umfasst zum Überprüfen, ob im empfangenen Authentifizierungstoken eine Wiederholungskennung enthalten ist, und zum Generieren der Authentifizierungsantwort, wenn im empfangenen Authentifizierungstoken eine Wiederholungskennung enthalten ist, auch wenn die im empfangenen Authentifizierungstoken enthaltene Sequenznummer nicht grösser als die genannte im Identifizierungsmodul (2) gespeicherte Sequenznummer ist.

8. System nach Anspruch 7, **dadurch gekennzeichnet, dass** die Zugangskontrolleinheit (3) Mittel umfasst zum Überprüfen, ob im Authentifizierungsvektor, der als letzter zur Generierung eines an das Identifizierungsmodul (2) übermittelten Authentifizierungstokens verwendet wurde, eine Wiederholungskennung enthalten ist, und zum erneuten Übermitteln des aus diesem letzten Authentifizierungsvektor generierten Authentifizierungstokens über das Telekommunikationsnetz (6) an das Identifizierungsmodul (2), wenn im letzten Authentifizierungsvektor eine Wiederholungskennung enthalten ist.

9. System nach einem der Ansprüche 7 oder 8, **dadurch gekennzeichnet, dass** das Identifizierungsmodul (2) Mittel umfasst zum Speichern der Sequenznummer, die im empfangenen Authentifizierungstoken enthalten ist, wenn sie grösser ist als eine im Identifizierungsmodul (2) gespeicherte, vorgängig von der Zugangskontrolleinheit (3) empfangene Sequenznummer, und dass das Identifizierungsmodul (2) Mittel umfasst zum Überprüfen, vor der Generierung der Authentifizierungsantwort, ob die im Authentifizierungstoken enthaltene Sequenznummer gleich gross wie die grösste vorgängig von der Zugangskontrolleinheit (3) empfangene, im Identifizierungsmodul (2) gespeicherte Sequenznummer ist, wenn im Authentifizierungstoken eine Wiederholungskennung enthalten ist.

10. System nach einem der Ansprüche 7 bis 9, **dadurch gekennzeichnet, dass** die Authentifizierungszentrale (4) Mittel umfasst zum Generieren von Sätzen mit mehreren Authentifizierungsvektoren, und dass die Authentifizierungszentrale (4) Mittel umfasst zum Einfügen der Wiederholungskennung in den letzten Authentifizierungsvektor des Satzes, der von der Zugangskontrolleinheit (3) als letzter des Satzes zur Generierung eines Authentifizierungstokens verwendet wird.

11. System nach einem der Ansprüche 7 bis 10, **dadurch gekennzeichnet, dass** die Authentifizierungszentrale (4) Mittel umfasst zum Generieren von Sätzen mit mehreren Authentifizierungsvektoren, dass die Zugangskontrolleinheit (3) Mittel umfasst zum Generieren eines Authentifizierungstokens aus einem neuen, noch nicht verwendeten Authentifizierungsvektor aus einem von der Authentifizierungszentrale (4) entgegengenommenen Satz, und dass die Zugangskontrolleinheit (3) Mittel umfasst zum Anfordern von neuen Authentifizierungsvektoren von der Authentifizierungszentrale (4), wenn alle Authentifizierungsvektoren im Satz bereits zur Generierung von Authentifizierungstoken verwendet wurden, wobei diese letztgenannten Mittel überprüfen, ob im Authentifizierungsvektor, der als letzter des Satzes zur Generierung eines Authentifizierungstokens verwendet wurde, eine Wiederholungskennung enthalten ist und den aus diesem letzten Authentifizierungsvektor generierten Authentifizierungstoken gegebenenfalls erneut an das Identifizierungsmodul (2) übermitteln, wenn die Datenkommunikation mit der Authentifizierungszentrale (4) und/oder die Authentifizierungszentrale (4) gestört ist.

12. System nach einem der Ansprüche 7 bis 11, **dadurch gekennzeichnet, dass** die Authentifizierungszentrale (4) Mittel umfasst zum Generieren von Sätzen mit mehreren Authentifizierungsvektoren, dass die Zugangskontrolleinheit (3) Mittel umfasst zum Generieren eines Authentifizierungstokens aus einem neuen, noch nicht verwendeten Authentifizierungsvektor aus einem von der Authentifizierungszentrale (4) entgegengenommenen Satz, und dass die Zugangskontrolleinheit (3) Mittel umfasst zum Anfordern von neuen Authentifizierungsvektoren von der Authentifizierungszentrale (4), bevor alle Authentifizierungsvektoren im Satz bereits zur Generierung von Authentifizierungstoken verwendet wurden.

13. System nach einem der Ansprüche 7 bis 12, **dadurch gekennzeichnet, dass** das Identifizierungsmodul (2) als USIM-Modul für den Einsatz in einem UMTS-Mobilfunknetz (6) ausgeführt ist, dass die Zugangskontrolleinheit (3) als VLR- oder SGSN-Einheit ausgeführt ist, und dass die Authentifizierungszentrale (4) als AuC-Einheit für ein UMTS-Mobilfunknetz (6) ausgeführt ist.

14. Identifizierungsmodul (2) für die Teilnehmerauthentifizierung in einem Telekommunikationsnetz (6), umfassend eine Teilnehmeridentifizierung zur Identifizierung des Teilnehmers im Telekommunikationsnetz (6), Mittel zum Entgegennehmen eines Authentifizierungstokens von einer Zugangskontrolleinheit (3) über das Telekommunikationsnetz (6), Mittel zum Überprüfen, ob eine im empfangenen Authentifizierungstoken enthaltene Sequenznummer grösser als eine im Identifizierungsmodul (2) gespeicherte Sequenznummer ist, Mittel zum Generieren einer Authentifizierungsantwort basierend auf dem empfangenen Authentifizierungstoken, und Mittel zum Übermitteln der generierten Authentifizierungsantwort über das Telekommunikationsnetz (6) an die Zugangskontrolleinheit (3), **gekennzeichnet durch**
Mittel zum Überprüfen, ob im empfangenen Authentifizierungstoken eine Wiederholungskennung enthalten ist, und zum Generieren der Authentifizierungsantwort, wenn im empfangenen Authentifizierungstoken eine Wiederholungskennung enthalten ist, auch wenn die im empfangenen Authentifizierungstoken enthaltene Sequenznummer nicht grösser als die genannte im Identifizierungsmodul (2) gespeicherte Sequenznummer ist.

15. Identifizierungsmodul (2) nach Anspruch 14, **dadurch gekennzeichnet, dass** das Identifizierungsmodul (2) Mittel umfasst zum Speichern der Sequenznummer, die im empfangenen Authentifizierungstoken enthalten ist, wenn sie grösser ist als eine im Identifizierungsmodul (2) gespeicherte, vorgängig von der Zugangskontrolleinheit (3) empfangene Sequenznummer, und dass das Identifizierungsmodul (2) Mittel umfasst zum Überprüfen, vor der Generierung der Authentifizierungsantwort, ob die im Authentifizierungstoken enthaltene Sequenznummer gleich oder grösser als die grösste vorgängig von der Zugangskontrolleinheit (3) empfangene, im Identifizierungsmodul (2) gespeicherte Sequenznummer ist, wenn im Authentifizierungstoken eine Wiederholungskennung enthalten ist.

16. Identifizierungsmodul (2) nach einem der Ansprüche 14 oder 15, **dadurch gekennzeichnet, dass** das Identifizierungsmodul (2) als USIM-Modul für den Einsatz in einem UMTS-Mobilfunknetz ausgeführt ist.

17. Zugangskontrolleinheit (3) für die Teilnehmerauthentifizierung in einem Telekommunikationsnetz (6), umfassend Mittel zum Anfordern und Entgegennehmen von Authentifizierungsvektoren von einer Authentifizierungszentrale (4), Mittel zum Generieren von Authentifizierungstoken aus jeweils einem der Authentifizierungsvektoren, und zum Übermitteln eines generierten Authentifizierungstokens über das Telekommunikationsnetz (6) an ein Identifizierungsmodul (2) des Teilnehmers, und Mittel zum Entgegennehmen einer Authentifizierungsantwort vom Identifizierungsmodul (2) über das Telekommunikationsnetz (6), **gekennzeichnet durch**
Mittel zum Generieren eines Authentifizierungstokens (S7, S8) aus Teilen eines Authentifizierungsvektors, die eine Wiederholungskennung umfassen.

18. Zugangskontrolleinheit (3) nach Anspruch 17, **dadurch gekennzeichnet, dass** die Zugangskontrolleinheit (3) Mittel umfasst zum Überprüfen, ob im Authentifizierungsvektor, der als letzter zur Generierung eines an das Identifizierungsmodul (2) übermittelten Authentifizierungstokens verwendet wurde, eine Wiederholungskennung enthalten ist, und zum erneuten Übermitteln des aus diesem letzten Authentifizierungsvektor generierten Authentifizierungstokens über das Telekommunikationsnetz (6) an das Identifizierungsmodul (2), wenn im letzten Authentifizierungsvektor eine Wiederholungskennung enthalten ist.

19. Zugangskontrolleinheit (3) nach einem der Ansprüche 17 oder 18, **dadurch gekennzeichnet, dass** die Zugangskontrolleinheit (3) Mittel umfasst zum Generieren eines Authentifizierungstokens aus einem neuen, noch nicht verwendeten Authentifizierungsvektor aus einem von der Authentifizierungszentrale (4) entgegengenommenen Satzes, und dass die Zugangskontrolleinheit (3) Mittel umfasst zum Anfordern von neuen Authentifizierungsvektoren von der Authentifizierungszentrale (4), wenn alle Authentifizierungsvektoren im Satz bereits zur Generierung von Authentifizierungstoken verwendet wurden, wobei diese letztgenannten Mittel überprüfen, ob im Authentifizierungsvektor, der als letzter des Satzes zur Generierung eines Authentifizierungstokens verwendet wurde, eine Wiederholungskennung enthalten ist und den aus diesem letzten Authentifizierungsvektor generierten Authentifizierungstoken gegebenenfalls erneut an das Identifizierungsmodul (2) übermitteln, wenn die Datenkommunikation mit der Authentifizierungszentrale (4) und/oder die Authentifizierungszentrale (4) gestört ist.

20. Zugangskontrolleinheit (3) nach einem der Ansprüche 17 bis 19, **dadurch gekennzeichnet, dass** die Zugangskontrolleinheit (3) Mittel umfasst zum Generieren eines Authentifizierungstokens aus einem neuen, noch nicht verwendeten Authentifizierungsvektor aus einem von der Authentifizierungszentrale (4) entgegengenommenen Satzes, und dass die Zugangskontrolleinheit (3) Mittel umfasst zum Anfordern von neuen Authentifizierungsvektoren von der Authentifizierungszentrale (4), bevor alle Authentifizierungsvektoren im Satz bereits zur Generierung von Authentifizierungstoken verwendet wurden.

21. Zugangskontrolleinheit (3) nach einem der Ansprüche 17 bis 20, **dadurch gekennzeichnet, dass** die Zugangskontrolleinheit (3) als VLR- oder SGSN-Einheit ausgeführt ist.

22. Authentifizierungszentrale (4) umfassend Mittel zum Entgegennehmen von Anforderungen von einer Zugangskontrolleinheit (3) eines Telekommunikationsnetzes (6) für Authentifizierungsvektoren für die Teilnehmerauthentifizierung im Telekommunikationsnetz (6), Mittel zum Generieren der angeforderten Authentifizierungsvektoren, und Mittel zum Übermitteln der generierten Authentifizierungsvektoren an die Zugangskontrolleinheit (3), **gekennzeichnet durch**
Mittel zum Einfügen einer Wiederholungskennung in einen der Authentifizierungsvektoren.

23. Authentifizierungszentrale (4) nach Anspruch 22, **dadurch gekennzeichnet, dass** die Authentifizierungszentrale (4) Mittel umfasst zum Generieren von Sätzen mit mehreren Authentifizierungsvektoren, und dass die Authentifizierungszentrale (4) Mittel umfasst zum Einfügen der Wiederholungskennung in den letzten Authentifizierungsvektor des Satzes, der von der Zugangskontrolleinheit (3) als letzter des Satzes an das Identifizierungsmodul (2) übermittelt wird.

24. Authentifizierungszentrale (4) nach einem der Ansprüche 22 oder 23, **dadurch gekennzeichnet, dass** die Authentifizierungszentrale (4) als AuC-Einheit für ein UMTS-Mobilfunknetz (6) ausgeführt ist.

## Claims

1. Method for subscriber authentication in a telecommunications network (6), comprising generation of authentication vectors (S4) in an authentication control centre (4), transmission of the generated authentication vectors (S5) from the authentication control centre (4) to an access control unit (3) for the telecommunications network (6), transmission of an authentication token (S9), which is generated from one of the authentication vectors and comprises a sequence number from this authentication vector, from the access control unit (3) via the telecommunications network (6) to an identification module (2) for the subscriber, checking (S10) whether the sequence number contained in the received authentication token is greater than a sequence number stored in the identification module (2), generation of an authentication response (S14) by the identification module (2) based on the received authentication token, and transmission of the generated authentication response (S15) from the identification module (2) via the telecommunications network (6) to the access control unit (3), **characterized by**
- insertion of a repetition identification (S4') by the authentication control centre (4) in one of the authentication vectors,
- generation of the authentication token (S8') by the access control unit (3) from parts of the authentication vector which comprise the repetition identification, and
- checking (S12) by the identification module (2) whether the received authentication token contains a repetition identification and, if appropriate, generation of the authentication response (S14), even if the sequence number contained in the received authentication token is not greater than the said sequence number stored in the identification module (2).

2. Method according to Claim 1, **characterized in that** the access control unit (3) checks (S7) whether the authentication vector which was the last to be used for generation of an authentication token transmitted to the identification module (2) contains a repetition identification, and **in that** the access control unit (3), if appropriate, transmits (S9) the authentication token generated from this last authentication vector via the telecommunications network (6) to the identification module (2) once again.

3. Method according to one of Claims 1 or 2, **characterized in that** the sequence number contained in the received authentication token is stored (S11) in the identification module (2) if it is greater than a sequence number which is stored in the authentication module (2) and was previously received from the access control unit (3), and **in that**, before the generation of the authentication response, the identification module (2) checks (S13) whether the sequence number contained in the authentication token is equal to the highest sequence number which is stored in the identification module (2) and was previously received from the access control unit (3), if the authentication token contains a repetition identification.

4. Method according to one of Claims 1 to 3, **characterized in that** the authentication control centre (4) transmits (S5) a set of two or more authentication vectors to the access control unit (3), and **in that** the authentication control centre (4) inserts (S4') the repetition identification in the last authentication vector in the set, which is used by the access control unit (3) as the last of the set for generation of an authentication token.

5. Method according to one of Claims 1 to 4, **characterized in that** the authentication control centre (4) transmits (S5) a set of two or more authentication vectors to the access control unit (3), **in that** the access control unit (3) in each case generates (S8) an authentication token from a new authentication vector which has not yet been used in the set, and **in that** the access control unit (3) requests (S3) new authentication vectors from the authentication control centre (4) when all of the authentication vectors in the set have already been used for generation of authentication tokens, with the access control unit (3) checking (S7) whether the authentication vector which was the last in the set to be used for production of an authentication token contains a repetition identification, and transmitting (S9) the authentication token generated from this last authentication vector once again, if appropriate, to the identification module (2) if the data communication with the authentication control centre (4) is subject to interference and/or the authentication control centre (4) is faulty.

6. Method according to one of Claims 1 to 5, **characterized in that** the authentication control centre (4) transmits (S5) a set of two or more authentication vectors to the access control unit (3), **in that** the access control unit (3) in each case generates (S8) an authentication token from a new authentication vector which has not yet been used in the set, and **in that** the access control unit (3) requests (S3) new authentication vectors from the authentication control centre (4) before all of the authentication vectors in the set have already been used for generation of authentication tokens.

7. System for subscriber authentication in a telecommunications network (6), comprising at least one authentication control centre (4) for generation of authentication vectors for the subscriber authentication in a telecommunications network (6) and for transmission of the generated authentication vectors to access control units (3), at least one access control unit (3) which can be connected to the telecommunications network (6) for requesting and receiving authentication vectors from the authentication control centre (4), for generation of authentication tokens from in each case one of the authentication vectors, and for transmission of a generated authentication token via the telecommunications network (6) to an identification module (2) for a subscriber, at least one identification module (2) which has means for receiving an authentication token from the access control unit (3) via the telecommunications network (6), means for checking whether a sequence number contained in the received authentication token is greater than a sequence number stored in the identification module (2), means for generation of an authentication response based on the received authentication token, and means for transmission of the generated authentication response via the telecommunications network (6) to the access control unit (3), **characterized**
**in that** the authentication control centre (4) has means for insertion of a repetition identification into one of the authentication vectors,
**in that** the access control unit (3) has means for generation of an authentication token (S7, S8) from parts of an authentication vector which comprise the repetition identification, and
**in that** the identification module (2) has means for checking whether the received authentication token contains a repetition identification, and for generation of the authentication response if the received authentication token contains a repetition identification, even if the sequence number which is contained in the received authentication token is not greater than the said sequence number which is stored in the identification module (2).

8. System according to Claim 7, **characterized in that** the access control unit (3) has means for checking whether the authentication vector which was the last to be used for generation of an authentication token which was transmitted to the identification module (2) contains a repetition identification, and for renewed transmission of the authentication token generated from this last authentication vector via the telecommunications network (6) to the identification module (2) if the last authentication vector contains a repetition identification.

9. System according to one of Claims 7 or 8, **characterized in that** the identification module (2) has means for storage of the sequence number which is contained in the received authentication token if it is greater than a sequence number which is stored in the identification module (2) and was previously received from the access control unit (3), and **in that** the identification module (2) has means for checking, before the generation of the authentication response, whether the sequence number contained in the authentication token is equal to the largest sequence number previously received from the access control unit (3) and stored in the identification module (2) when the authentication token contains a repetition identification.

10. System according to one of Claims 7 to 9, **characterized in that** the authentication control centre (4) has means for generation of sets with two or more authentication vectors, and **in that** the authentication control centre (4) has means for insertion of the repetition identification in the last authentication vector in the set, which is used by the access control unit (3) as the last in the set for generation of an authentication token.

11. System according to one of Claims 7 to 10, **characterized in that** the authentication control centre (4) has means for generation of sets of two or more authentication vectors, **in that** the access control unit (3) has means for generation of an authentication token from a new authentication vector which has not yet been used from a set received from the authentication control centre (4), and **in that** the access control unit (3) has means for requesting new authentication vectors from the authentication control centre (4) when all of the authentication vectors in the set have already been used for generation of authentication tokens, with these last-mentioned means checking whether the authentication vector which was the last in the set to be used for generation of an authentication token contains a repetition identification, and for transmission of the authentication token generated from this last authentication vector, if appropriate, once again to the identification module (2) when the data communication with the authentication control centre (4) is subject to interference and/or the authentication control centre (4) is faulty.

12. System according to one of Claims 7 to 11, **characterized in that** the authentication control centre (4) has means for generation of sets of two or more authentication vectors, **in that** the access control unit (3) has means for generation of an authentication token from a new authentication vector which has not yet been used from a set received from the authentication control centre (4), and **in that** the access control unit (3) has means for requesting new authentication vectors from the authentication control centre (4) before all of the authentication vectors in the set have already been used for generation of authentication tokens.

13. System according to one of Claims 7 to 12, **characterized in that** the identification module (2) is in the form of a USIM module for use in a UMTS mobile radio network (6), **in that** the access control unit (3) is in the form of a VLR or SGSN unit, and **in that** the authentication control centre (4) is in the form of an AuC unit for a UMTS mobile radio network (6).

14. Identification module (2) for subscriber authentication in a telecommunications network (6), comprising a subscriber identification for identification of the subscriber in the telecommunications network (6), means for receiving an authentication token from an access control unit (3) via the telecommunications network (6), means for checking whether a sequence number contained in the received authentication token is greater than a sequence number stored in the identification module (2), means for generation of an authentication response based on the received authentication token, and means for transmission of the generated authentication response via the telecommunications network (6) to the access control unit (3), **characterized by**
means for checking whether the received authentication token contains a repetition identification, and for generation of the authentication response if the received authentication token contains a repetition identification, even if the sequence number contained in the received authentication token is not greater than the said sequence number stored in the identification module (2).

15. Identification module (2) according to Claim 14, **characterized in that** the identification module (2) has means for storage of the sequence number which is contained in the received authentication token if it is greater than a sequence number which is stored in the identification module (2) and was previously received from the access control unit (3), and **in that** the identification module (2) has means for checking, before the generation of the authentication response, whether the sequence number contained in the authentication token is equal to or greater than the largest sequence number which was previously received from the access control unit (3) and is stored in the identification module (2), if the authentication token contains a repetition identification.

16. Identification module (2) according to one of Claims 14 or 15, **characterized in that** the identification module (2) is in the form of a USIM module for use in a UMTS mobile radio network.

17. Access control unit (3) for subscriber authentication in a telecommunications network (6), having means for requesting and receiving authentication vectors from an authentication control centre (4), means for generation of authentication tokens from in each case one of the authentication vectors, and for transmission of a generated authentication token via the telecommunications network (6) to an identification module (2) for the subscriber, and means for receiving an authentication response from the identification module (2) via the telecommunications network (6), **characterized by**
means for generation of an authentication token (S7, S8) from parts of an authentication vector which include a repetition identification.

18. Access control unit (3) according to Claim 17, **characterized in that** the access control unit (3) has means for checking whether the authentication vector which was the last to be used for generation of an authentication token transmitted to the identification module (2) contains a repetition identification, and for renewed transmission of the authentication token generated from this last authentication vector via the telecommunications network (6) to the identification module (2) if the last authentication vector contains a repetition identification.

19. Access control unit (3) according to one of Claims 17 or 18, **characterized in that** the access control unit (3) has means for generation of an authentication token from a new authentication vector which has not yet been used from a set received from the authentication control centre (4), and **in that** the access control unit (3) has means for requesting new authentication vectors from the authentication control centre (4) when all of the authentication vectors in the set have already been used for generation of authentication tokens, with these last-mentioned means checking whether the authentication vector which was the last in the set to be used for generation of an authentication token contains a repetition identification, and transmitting the authentication token generated from this last authentication vector, if appropriate, to the identification module (2) once again if the data communication with the authentication control centre (4) is subject to interference and/or the authentication control centre (4) is faulty.

20. Access control unit (3) according to one of Claims 17 to 19, **characterized in that** the access control unit (3) has means for generation of an authentication token from a new authentication vector which has not yet been used from a set received from the authentication control centre (4), and **in that** the access control unit (3) has means for requesting new authentication vectors from the authentication control centre (4) before all of the authentication vectors in the set have already been used for generation of authentication tokens.

21. Access control unit (3) according to one of Claims 17 to 20, **characterized in that** the access control unit (3) is in the form of a VLR or SGSN unit.

22. Authentication control centre (4) having means for receiving requests from an access control unit (3) in a telecommunications network (6) for authentication vectors for subscriber authentication in the telecommunications network (6), means for generation of the requested authentication vectors, and means for transmission of the generated authentication vectors to the access control unit (3), **characterized by**
means for insertion of a repetition identification in one of the authentication vectors.

23. Authentication control centre (4) according to Claim 22, **characterized in that** the authentication control centre (4) has means for generation of sets of two or more authentication vectors, and **in that** the authentication control centre (4) has means for insertion of the repetition identification in the last authentication vector in the set, which is transmitted from the access control unit (3) as the last in the set to the identification module (2).

24. Authentication control centre (4) according to one of Claims 22 or 23, **characterized in that** the authentication control centre (4) is in the form of an AuC unit for a UMTS mobile radio network (6).

## Revendications

1. Procédé pour l'authentification des abonnés dans un réseau de télécommunication (6), comprenant la génération de vecteurs d'authentification (S4) dans une centrale d'authentification (4), la transmission des vecteurs d'authentification (S5) générés de la centrale d'authentification (4) à une unité de contrôle d'accès (3) du réseau de télécommunication (6), la transmission d'un jeton d'authentification (S9), lequel est généré à partir de l'un des vecteurs d'authentification et comprend un numéro de séquence de ce vecteur d'authentification, de l'unité de contrôle d'accès (3) à un module d'identification (2) de l'abonné par le biais du réseau de télécommunication (6), la vérification (S10) du fait que le numéro de séquence contenu dans l'jeton d'authentification est supérieur à un numéro de séquence enregistré dans le module d'identification (2), la génération d'une réponse d'authentification (S14) par le module d'identification (2) en se basant sur l'jeton d'authentification reçu et la transmission de la réponse d'authentification (S15) générée du module d'identification (2) à l'unité de contrôle d'accès (3) par le biais du réseau de communication (6), **caractérisé par**
- l'insertion d'un identifiant de répétition (S4') par la centrale d'authentification (4) dans l'un des vecteurs d'authentification,
- la génération de l'jeton d'authentification (S8') par l'unité de contrôle d'accès (3) à partir de parties du vecteur d'authentification qui comprennent l'identifiant de répétition, et
- la vérification (S12) par le module d'identification (2) du fait que l'jeton d'authentification reçu contient un identifiant de répétition et, le cas échant, la génération de la réponse d'authentification (S14) même lorsque le numéro de séquence contenu dans l'jeton d'authentification reçu n'est pas supérieur audit numéro de séquence enregistré dans le module d'identification (2).

2. Procédé selon la revendication 1, **caractérisé en ce que** l'unité de contrôle d'accès (3) vérifie (S7) si un identifiant de répétition est contenu dans le vecteur d'authentification qui a été utilisé en dernier pour générer un jeton d'authentification transmis au module d'identification (2) et que l'unité de contrôle d'accès (3) transmet (S9) éventuellement de nouveau l'jeton d'authentification généré à partir de ce dernier vecteur d'authentification au module d'identification (2) par le biais du réseau de télécommunication (6).

3. Procédé selon l'une des revendications 1 ou 2, **caractérisé en ce que** le numéro de séquence contenu dans l'jeton d'authentification reçu est enregistré (S11) dans le module d'identification (2) s'il est supérieur à un numéro de séquence enregistré dans le module d'identification (2) qui a été reçu précédemment par l'unité de contrôle d'accès (3), et que le module d'identification (2) vérifie (S13) avant de générer la réponse d'authentification si le numéro de séquence contenu dans l'jeton d'authentification est de la même valeur que le numéro de séquence le plus grand enregistré dans le module d'identification (2) qui a été reçu précédemment par l'unité de contrôle d'accès (3) lorsque l'jeton d'authentification contient un identifiant de répétition.

4. Procédé selon l'une des revendications 1 à 3, **caractérisé en ce que** la centrale d'authentification
(4) transmet (S5) à l'unité de contrôle d'accès (3) un ensemble de plusieurs vecteurs d'authentification et que la centrale d'authentification (4) insère (S4') l'identifiant de répétition dans le dernier vecteur d'authentification de l'ensemble qui est utilisé par l'unité de contrôle d'accès (3) comme dernier de l'ensemble pour générer un jeton d'authentification.

5. Procédé selon l'une des revendications 1 à 4, **caractérisé en ce que** la centrale d'authentification (4) transmet (S5) à l'unité de contrôle d'accès (3) un ensemble de plusieurs vecteurs d'authentification, que l'unité de contrôle d'accès (3) génère (S8) à chaque fois un jeton d'authentification à partir d'un nouveau vecteur d'authentification de l'ensemble qui n'est pas encore utilisé, et que l'unité de contrôle d'accès (3) demande (S3) de nouveau vecteurs d'authentification de la part de la centrale d'authentification (4) lorsque tous les vecteurs d'authentification dans l'ensemble ont déjà été utilisés pour générer des jetons d'authentification, l'unité de contrôle d'accès (3) vérifiant (S7) si le vecteur d'authentification qui a été utilisé comme dernier de l'ensemble pour générer un jeton d'authentification contient un identifiant de répétition et transmettant (S9) éventuellement de nouveau l'jeton d'authentification généré à partir de ce dernier vecteur d'authentification au module d'identification (2) lorsque la communication de données avec la centrale d'authentification (4) et/ou la centrale d'authentification (4) est perturbée.

6. Procédé selon l'une des revendications 1 à 5, **caractérisé en ce que** la centrale d'authentification (4) transmet (S5) à l'unité de contrôle d'accès (3) un ensemble de plusieurs vecteurs d'authentification, que l'unité de contrôle d'accès (3) génère (S8) à chaque fois un jeton d'authentification à partir d'un nouveau vecteur d'authentification de l'ensemble qui n'est pas encore utilisé, et que l'unité de contrôle d'accès (3) demande (S3) de nouveau vecteurs d'authentification de la part de la centrale d'authentification (4) avant que tous les vecteurs d'authentification dans l'ensemble aient déjà été utilisés pour générer des jetons d'authentification.

7. Système pour l'authentification des abonnés dans un réseau de télécommunication (6), comprenant au moins une centrale d'authentification (4) destinée à générer des vecteurs d'authentification pour l'authentification des abonnés dans un réseau de télécommunication (6) et destinée à transmettre les vecteurs d'authentification générés à des unités de contrôle d'accès (3), au moins une unité de contrôle d'accès (3) pouvant être reliée au réseau de télécommunication (6) destinée à demander et prendre en compte les vecteurs d'authentification de la centrale d'authentification (4), destinée à générer des jetons d'authentification à chaque fois à partir de l'un des vecteurs d'authentification et destinée à transmettre un jeton d'authentification généré à un module d'identification (2) d'un abonné par le biais du réseau de télécommunication (6), au moins un module d'identification (2) qui comprend des moyens pour prendre en compte un jeton d'authentification de l'unité de contrôle d'accès (3) par le biais du réseau de communication (6), des moyens pour vérifier si le numéro de séquence contenu dans l'jeton d'authentification reçu est supérieur à un numéro de séquence enregistré dans le module d'identification (2), des moyens pour générer une réponse d'authentification en se basant sur l'jeton d'authentification reçu et des moyens pour transmettre la réponse d'authentification générée à l'unité de contrôle d'accès (3) par le biais du réseau de communication (6), **caractérisé en ce**
**que** la centrale d'authentification (4) comprend des moyens pour insérer un identifiant de répétition dans l'un des vecteurs d'authentification,
**que** l'unité de contrôle d'accès (3) comprend des moyens pour générer un jeton d'authentification (S7, S8) à partir de parties du vecteur d'authentification qui comprennent l'identifiant de répétition, et
**que** le module d'identification (2) comprend des moyens pour vérifier si l'jeton d'authentification reçu contient un identifiant de répétition et pour générer la réponse d'authentification lorsque l'jeton d'authentification reçu contient un identifiant de répétition, même lorsque le numéro de séquence contenu dans l'jeton d'authentification reçu n'est pas supérieur audit numéro de séquence enregistré dans le module d'identification (2).

8. Système selon la revendication 7, **caractérisé en ce que** l'unité de contrôle d'accès (3) comprend des moyens pour vérifier si un identifiant de répétition est contenu dans le vecteur d'authentification qui a été utilisé en dernier pour générer un jeton d'authentification transmis au module d'identification (2) et pour retransmettre l'jeton d'authentification généré à partir de ce dernier vecteur d'authentification au module d'identification (2) par le biais du réseau de télécommunication (6) lorsque le dernier vecteur d'authentification contient un identifiant de répétition.

9. Système selon l'une des revendications 7 ou 8, **caractérisé en ce que** le module d'identification (2) comprend des moyens pour enregistrer le numéro de séquence contenu dans l'jeton d'authentification reçu s'il est supérieur à un numéro de séquence enregistré dans le module d'identification (2) qui a été reçu précédemment par l'unité de contrôle d'accès (3), et que le module d'identification (2) comprend des moyens pour vérifier avant de générer la réponse d'authentification si le numéro de séquence contenu dans l'jeton d'authentification est de la même valeur que le numéro de séquence le plus grand enregistré dans le module d'identification (2) qui a été reçu précédemment par l'unité de contrôle d'accès (3) lorsque l'jeton d'authentification contient un identifiant de répétition.

10. Système selon l'une des revendications 7 à 9, **caractérisé en ce que** la centrale d'authentification (4) comprend des moyens pour générer des ensembles de plusieurs vecteurs d'authentification et que la centrale d'authentification (4) comprend des moyens pour insérer l'identifiant de répétition dans le dernier vecteur d'authentification de l'ensemble qui est utilisé par l'unité de contrôle d'accès (3) comme dernier de l'ensemble pour générer un jeton d'authentification.

11. Système selon l'une des revendications 7 à 10, **caractérisé en ce que** la centrale d'authentification (4) comprend des moyens pour générer des ensembles de plusieurs vecteurs d'authentification, que l'unité de contrôle d'accès (3) comprend des moyens pour générer un jeton d'authentification à partir d'un nouveau vecteur d'authentification qui n'est pas encore utilisé de l'ensemble pris en compte par la centrale d'authentification (4) et que l'unité de contrôle d'accès (3) comprend des moyens pour demander de nouveaux vecteurs d'authentification de la part de la centrale d'authentification (4) lorsque tous les vecteurs d'authentification dans l'ensemble ont déjà été utilisés pour générer des jetons d'authentification, ces derniers moyens mentionnés vérifiant si le vecteur d'authentification qui a été utilisé comme dernier de l'ensemble pour générer un jeton d'authentification contient un identifiant de répétition et transmettant éventuellement de nouveau l'jeton d'authentification généré à partir de ce dernier vecteur d'authentification au module d'identification (2) lorsque la communication de données avec la centrale d'authentification (4) et/ou la centrale d'authentification (4) est perturbée.

12. Système selon l'une des revendications 7 à 11, **caractérisé en ce que** la centrale d'authentification (4) comprend des moyens pour générer des ensembles de plusieurs vecteurs d'authentification, que l'unité de contrôle d'accès (3) comprend des moyens pour générer un jeton d'authentification à partir d'un nouveau vecteur d'authentification qui n'est pas encore utilisé de l'ensemble pris en compte par la centrale d'authentification (4), et que l'unité de contrôle d'accès (3) comprend des moyens pour demander de nouveaux vecteurs d'authentification de la part de la centrale d'authentification (4) avant que tous les vecteurs d'authentification dans l'ensemble aient déjà été utilisés pour générer des jetons d'authentification.

13. Système selon l'une des revendications 7 à 12, **caractérisé en ce que** le module d'identification (2) est réalisé sous la forme d'un module USIM pour être utilisé dans un réseau de radiocommunication mobile UMTS (6), que l'unité de contrôle d'accès (3) est réalisée sous la forme d'une unité VLR ou SGSN et que la centrale d'authentification (4) est réalisée sous la forme d'une unité AuC pour un réseau de radiocommunication mobile UMTS (6).

14. Module d'identification (2) pour l'authentification des abonnés dans un réseau de télécommunication (6), comprenant une identification d'abonné destinée à identifier l'abonné dans le réseau de télécommunication (6), des moyens pour prendre en compte un jeton d'authentification d'une unité de contrôle d'accès (3) par le biais du réseau de télécommunication (6), des moyens pour vérifier si le numéro de séquence contenu dans l'jeton d'authentification reçu est supérieur à un numéro de séquence enregistré dans le module d'identification (2), des moyens pour générer une réponse d'authentification en se basant sur l'jeton d'authentification reçu et des moyens pour transmettre la réponse d'authentification générée à l'unité de contrôle d'accès (3) par le biais du réseau de télécommunication (6), **caractérisé par**
des moyens pour vérifier si l'jeton d'authentification reçu contient un identifiant de répétition et pour générer la réponse d'authentification lorsque l'jeton d'authentification reçu contient un identifiant de répétition, même lorsque le numéro de séquence contenu dans l'jeton d'authentification reçu n'est pas supérieur audit numéro de séquence enregistré dans le module d'identification (2).

15. Module d'identification (2) selon la revendication 14, **caractérisé en ce que** le module d'identification (2) comprend des moyens pour enregistrer le numéro de séquence qui est contenu dans les jetons d'authentification reçus s'il est supérieur à un numéro de séquence enregistré dans le module d'identification (2) et reçu précédemment par l'unité de contrôle d'accès (3) et que le module d'identification (2) comprend des moyens pour vérifier, avant de générer la réponse d'authentification, si le numéro de séquence contenu dans l'jeton d'authentification est égal ou supérieur au plus grand numéro de séquence enregistré dans le module d'identification (2) et reçu précédemment par l'unité de contrôle d'accès (3) lorsque l'jeton d'authentification contient un identifiant de répétition.

16. Module d'identification (2) selon l'une des revendications 14 ou 15, **caractérisé en ce que** le module d'identification (2) est réalisé sous la forme d'un module USIM pour être utilisé dans un réseau de radiocommunication mobile UMTS.

17. Unité de contrôle d'accès (3) pour l'authentification des abonnés dans un réseau de télécommunication (6), comprenant des moyens pour demander et prendre en compte des vecteurs d'authentification provenant d'une centrale d'authentification (4), des moyens pour générer des jetons d'authentification à chaque fois à partir de l'un des vecteurs d'authentification et pour transmettre un jeton d'authentification généré à un module d'identification (2) de l'abonné par le biais du réseau de télécommunication (6), et des moyens pour prendre en compte une réponse d'authentification du module d'identification (2) par le biais du réseau de télécommunication (6), **caractérisé par**
des moyens pour générer un jeton d'authentification (S7, S8) à partir de parties du vecteur d'authentification qui comprennent l'identifiant de répétition.

18. Unité de contrôle d'accès (3) selon la revendication 17, **caractérisée en ce que** l'unité de contrôle d'accès (3) comprend des moyens pour vérifier si un identifiant de répétition est contenu dans le vecteur d'authentification qui a été utilisé en dernier pour générer un jeton d'authentification transmis au module d'identification (2) et pour transmettre de nouveau l'jeton d'authentification généré à partir de ce dernier vecteur d'authentification au module d'identification (2) par le biais du réseau de télécommunication (6) lorsque le dernier vecteur d'authentification contient un identifiant de répétition.

19. Unité de contrôle d'accès (3) selon l'une des revendications 17 ou 18, **caractérisée en ce que** l'unité de contrôle d'accès (3) comprend des moyens pour générer un jeton d'authentification à partir d'un nouveau vecteur d'authentification qui n'est pas encore utilisé d'un ensemble pris en compte par la centrale d'authentification (4), et que l'unité de contrôle d'accès (3) comprend des moyens pour demander de nouveaux vecteurs d'authentification de la part de la centrale d'authentification (4) lorsque tous les vecteurs d'authentification dans l'ensemble ont déjà été utilisés pour générer des jetons d'authentification, ces derniers moyens mentionnés vérifiant si le vecteur d'authentification qui a été utilisé comme dernier de l'ensemble pour générer un jeton d'authentification contient un identifiant de répétition et transmettant éventuellement de nouveau l'jeton d'authentification généré à partir de ce dernier vecteur d'authentification au module d'identification (2) lorsque la communication de données avec la centrale d'authentification (4) et/ou la centrale d'authentification (4) est perturbée.

20. Unité de contrôle d'accès (3) selon l'une des revendications 17 à 19, **caractérisée en ce que** l'unité de contrôle d'accès (3) comprend des moyens pour générer un jeton d'authentification à partir d'un nouveau vecteur d'authentification qui n'est pas encore utilisé d'un ensemble pris en compte par la centrale d'authentification (4), et que l'unité de contrôle d'accès (3) comprend des moyens pour demander de nouveaux vecteurs d'authentification de la part de la centrale d'authentification (4) avant que tous les vecteurs d'authentification dans l'ensemble aient déjà été utilisés pour générer des jetons d'authentification.

21. Unité de contrôle d'accès (3) selon l'une des revendications 17 à 20, **caractérisée en ce que** l'unité de contrôle d'accès (3) est réalisée sous la forme d'une unité VLR ou SGSN.

22. Centrale d'authentification (4) comprenant des moyens pour prendre en compte les demandes d'une unité de contrôle d'accès (3) d'un réseau de télécommunication (6) pour des vecteurs d'authentification pour l'authentification des abonnés dans le réseau de télécommunication (6), des moyens pour générer les vecteurs d'authentification demandés et des moyens pour transmettre les vecteurs d'authentification générés à l'unité de contrôle d'accès (3), **caractérisée par**
des moyens pour insérer un identifiant de répétition dans l'un des vecteurs d'authentification.

23. Centrale d'authentification (4) selon la revendication 22, **caractérisée en ce que** la centrale d'authentification (4) comprend des moyens pour générer des ensembles de plusieurs vecteurs d'authentification et que la centrale d'authentification (4) comprend des moyens pour insérer l'identifiant de répétition dans le dernier vecteur d'authentification de l'ensemble qui est transmis au module d'identification (2) par l'unité de contrôle d'accès (3) comme dernier de l'ensemble.

24. Centrale d'authentification (4) selon l'une des revendications 22 ou 23, **caractérisée en ce que** la centrale d'authentification (4) est réalisée sous la forme d'une unité AuC pour un réseau de radiocommunication mobile UMTS (6).
